# EUROPÄISCHE PATENTSCHRIFT

(11) **EP 0 613 236 B1**
(45) Veröffentlichungstag und Bekanntmachung des Hinweises auf die Patenterteilung: **16.04.1997**
(21) Anmeldenummer: 94102308.7
(22) Anmeldetag: 16.02.1994
(51) Int. Cl.: H02P 7/01

(54) **Anordnung zum Betrieb eines elektromotorischen Antriebes eines Kompressors eines Kühlaggregates für elektrische Schaltschränke**
Device for operating a compressor electromotor drive of a refrigerating unit for electrical installation cabinets
Dispositif de mise en service d'un compresseur pour climatiseurs d'armoires électriques

(30) Priorität: 24.02.1993 DE 4305605
(43) Veröffentlichungstag der Anmeldung: 31.08.1994
(73) Patentinhaber: ING. ROLF SEIFERT ELECTRONIC GmbH, D-58256 Ennepetal 1 (DE)
(72) Erfinder: Seifert, Rolf, Ing.(grad.), D-5650 Solingen-Burg (DE)
(74) Vertreter: Richter, Bernhard, Dipl.-Ing.

(56) Entgegenhaltungen:
- DE-A- 4 026 138
- PATENT ABSTRACTS OF JAPAN vol. 9, no. 255 (E-349) (1978) 12. Oktober 1985 & JP-A-60 102 893 (HITACHI SEISAKUSHO K.K.) 7. Juni 1985
- PATENT ABSTRACTS OF JAPAN vol. 7, no. 88 (E-170) (1233) 12. April 1983 & JP-A-58 015 487 (DAIKIN KOGYO K.K.) 28. Januar 1983
- PATENT ABSTRACTS OF JAPAN vol. 9, no. 201 (E-336) (1924) 17. August 1985 & JP-A-60 066 688 (HITACHI SEISAKUSHO) 16. April 1985

## Beschreibung

Die Erfindung betrifft eine Anordnung zum Betrieb eines elektromotorischen Antriebes eines Kompressors eines Kühlaggregates für elektrische, insbesondere elektronische Schaltschränke mit Mitteln zur Spannungszuführung und ferner zur Einstellung der dem Antriebsmotor zugeführten Spannung auf dessen Nennspannungsbereich (Oberbegriff des Anspruches 1). Dabei ist insbesondere an einen Wechselstrommotorantrieb von Rollkolben- oder Hubkolbenkompressoren gedacht. Es besteht die Forderung, daß dem elektromotorischen Antrieb des Kompressors eine genügend große Eingangsspannung zugeführt wird, damit er das geforderte Drehmoment hergibt. Handelsüblich werden Schaltschrankkühlgeräte mit elektromotorisch angetriebenen Kompressoren im Spannungsbereich nach der Norm IEC 38 geliefert, d.h. z.B. bei einer Nennspannung von 230 V, 50 Hz mit einem Toleranzfeld oder -bereich der erforderlichen Eingangsspannung von 207 - 253 V. Auch sind solche Aggregate für eine Nennspannung von 115 V, 60 Hz +/-10 % der Spannung im Handel. Dabei ergeben sich die Grundwerte dieser Spannungen (in den vorliegenden Beispielen 230 V sowie 115 V) aus den Netzspannungen, welche in den jeweiligen Ländern von den Energieversorgungsbetrieben geliefert werden.

Es sind in der Praxis Spannungsabweichungen zunächst innerhalb desjenigen Netzes möglich, mit denen der elektromotorische Antrieb solcher Kühlaggregate gespeist wird. Ferner sind die Nennspannungen der Energieversorgungsnetze in den einzelnen Ländern unterschiedlich. Die Differenzen zwischen den Nennspannungen der verschiedenen Länder sind unterschiedlich. Dies kann, wie das obige Beispiel zeigt, im Verhältnis 1:2 liegen. Hinzu kommt die o.g. Forderung, die Spannungsschwankungen innerhalb des betreffenden Netzes zu beherrschen. Diesen insgesamt sehr unterschiedlichen Spannungen der Praxis muß entsprochen werden. Wenn man nicht für jede der von der Praxis zur Verfügung gestellten Spannungen einen gesonderten Kompressor mit Antriebsmotor für das Schaltschrankkühlgerät anfertigen wollte, was die Kosten der Herstellung und Lagerhaltung sehr verteuern würde, so hatte man gemäß dem bisher hierzu bekannten Stand der Technik nur die Möglichkeit, der Forderung der Erweiterung der Spannungsbereiche solcher Aggregate mittels sehr schwerer, aufwendiger und viel Raum beanspruchender Vorschalttransformatoren oder ebenso aufwendiger und viel Raum beanspruchender Wechselrichter-Konstruktionen zu entsprechen.

Die Aufgabe der Erfindung besteht demgegenüber darin, bei geringem Raummehrbedarf und geringen zusätzlichen Anschaffungskosten dafür zu sorgen, daß die elektromotorischen Antriebe derartiger Kühlaggregate auch von Versorgungsnetzen gespeist werden können, deren Nennspannungen sehr unterschiedlich voneinander sind und damit auf jeden Fall außerhalb der Toleranzbereiche liegen, welche für die Antriebsspannung solcher Motoren gegeben ist.

Die Lösung dieser Aufgabe wird zunächst, ausgehend vom Oberbegriff des Anspruches 1, darin gesehen, daß parallel zum Netzanschluß des Antriebsmotors die Anordnung eine zusätzliche Spannungsquelle aufweist, deren Ausgangsspannungsbereich zumindest gleich dem Spannungsbereich zwischen den maximal möglichen Spannüngs werten der in Frage kommenden Netzspannungen einerseits und der Nennspannung oder der Nennspannung ± deren Toleranzgrenzen andererseits des Antriebsmotors ist, und daß Mittel für die von Hand oder bevorzugt automatisch erfolgende Zuschaltung der zusätzlichen Spannungsquelle an den Antriebsmotor vorgesehen sind. Eine solche zusätzliche Spannungsquelle muß nur die Differenzspannung und damit Differenzleistung zwischen der Netzspannung und -leistung des jeweiligen Versorgungsnetzes und der Nennspannung des Antriebsmotors bzw. der vom Hersteller festgelegten Toleranzgrenze der Nennspannung des Antriebsmotors liefern. Die zusätzliche Spannungsquelle ist also ein Energielieferer für sich, der dann zum Einsatz kommt, wenn sich die o.g. Differenzen zwischen den Netzspannungen einerseits und der Nennspannung oder der Nennspannung ± deren Toleranzgrenzen andererseits die Erfordernis ergibt, dem Verbraucher entweder mehr Leistung zuzuführen (falls die Netzspannung unter den Sollwert gesunken ist), oder aber durch Erzeugung einer Gegenspannung die vom Netz zu viel gelieferte Spannung bzw. Energie zu reduzieren. Diese Vorteile ergeben sich vorteilhafterweise mit einer relativ kleinen Baugröße der zusätzlichen Spannungsquelle und damit nur einem geringen zusätzlichen Raumbedarf. Die zusätzliche Spannungsquelle kann somit baulich in einem solchen Aggregat untergebracht werden. Außerdem sind die Fertigungskosten einer solchen zusätzlichen Spannungsquelle kleinerer Leistung relativ gering.

Es werden auf effiziente Weise erhebliche Erweiterungen des Bereiches der Einoanosspannung erzielt. Sollen nur Spannungsschwankungen in ein und demselben Netz ausgeglichen werden, so genügt es, wenn mit der zusätzlichen Spannungsquelle zusätzlich zu den Toleranzgrenzen der Nennspannung hiermit noch eine zusätzliche Spannung beispielsweise bis zu ±12 % der eingangs angegebenen Nennspannungsbereiche der jeweiligen Netzspannung hinzugegeben oder - falls die Netzspannung zu hoch sein sollte - davon weggenommen werden. Falls ein und dasselbe Aggregat in Ländern mit sehr unterschiedlichen Spannungen der Versorgungsnetze eingesetzt werden soll, kann durch entsprechende Vergrößerung der zusätzlichen Spannungsquelle auch dies beherrscht werden. Die Herstellungskosten sind auch dann noch wesentlich günstiger, als wenn man für jedes dieser Länder ein neues Aggregat auflegen würde. Es ist also ein neues, in seinem Einsatzbereich wesentlich erweitertes Schaltschrankkühlgerät mit Kompressorantrieb geschaffen. Ein Aggregat nach der Erfindung kann bei entsprechender Auslegung der zusätzlichen Spannungsquelle weltweit eingesetzt werden, ohne daß es irgendwelcher Änderungen, z.B. Vorschalttransformatoren oder dergleichen, bedarf. Ein besonderer Vorteil liegt darin, daß mit der Erfindung die Leistung der zusätzlichen Spannungsquelle schlagartig zu der Leistung hinzugebracht wird, welche vom Versorgungsnetz geliefert wird. Bei der hauptsächlich vorkommenden Ausführung der Kompressoren als Rollkolben- oder Hubkolbenkompressor besteht die Besonderheit, daß sie gegen Vollast angefahren werden müssen. Mit der Erfindung wird durch die schlagartige Zuschaltung der zusätzlichen Spannungsquelle die sofortige volle Leistungsabgabe des Antriebsmotors des Kompressors erreicht. Dies ergänzt sich im Sinne eines synergistischen Effektes mit der vorgenannten Forderung, daß derartige Kompressoren gegen Vollast in Betrieb genommen werden müssen. Dagegen würde das "Hochfahren" eines Transformators, wie er zum Stand der Technik benutzt wurde, die Spannung nicht schlagartig, sondern nur kontinuierlich auf den gewünschten Wert erhöhen und damit nicht den Effekt der schlagartigen Hervorbringung der vollen Motorleistung bewirken.

Eine bevorzugte Ausführungsform der Erfindung ist Gegenstand des Anspruches 2. Transformatoren sind robuste Bauelemente, welche den vorstehenden Forderungen der Erfindung sehr entsprechen. Von Vorteil ist, daß die Energie dieser zusätzlichen Spannungsquelle über die Primärwicklung des Transformators vom schon vorhandenen Versorgungsnetz geliefert werden kann. Zu dem Vorteil der geringen Baugröße der zusätzlichen Spannungsquelle in Form eines Transformators ist noch darauf hinzuweisen, daß bei der Erfindung dessen Primärwicklung nur einen Bruchteil des Stromes der Sekundärwicklung zur Führung braucht, also auch insoweit eine Ersparnis an Wickelraum und somit Kosten gegeben ist.

Die Anordnung nach der Erfindung kann in unterschiedlicher Weise geregelt und zu- bzw. abgeschaltet werden. Auch ist eine abgestufte oder stufenlose Einstellung der Größe der Spannung möglich, welche von der zusätzlichen Spannungsquelle abgegeben wird. Hierzu und zu weiteren Vorteilen und Merkmalen der Erfindung wird sowohl auf die weiteren Unteransprüche, als auch auf die nachfolgende Beschreibung und die zugehörige Zeichnung von erfindungsgemäßen Ausführungsmöglichkeiten verwiesen. In der Zeichnung zeigt:
- Fig. 1:: eine Anordnung nach der Erfindung schematisch in ihrem Aufbau,
- Fig. 2 bis 4:: ein Schaltschema über die Zu- und Abschaltung der zusätzlichen Schaltquelle, wobei die Fig. 2, 3 und 4 jeweils unterschiedliche Schaltungen zeigen.

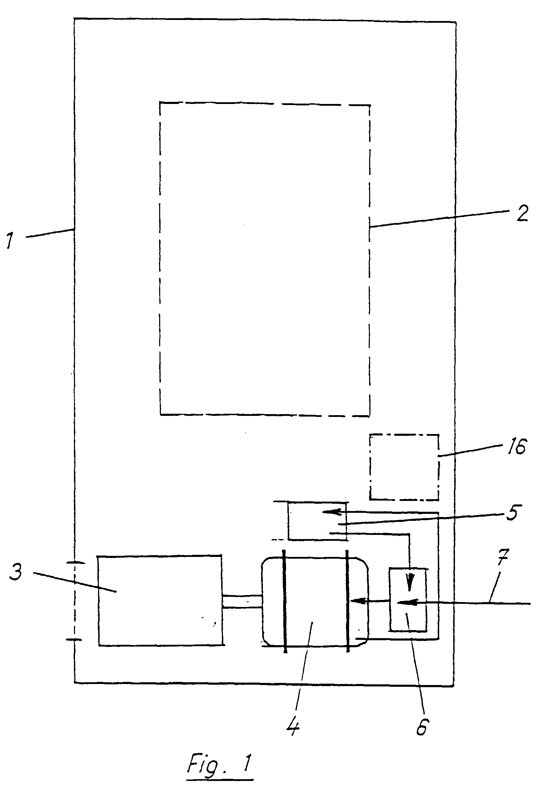

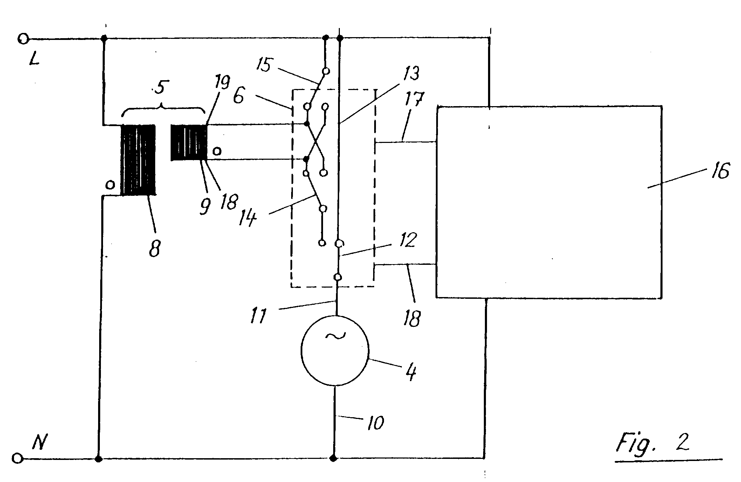

Fig. 1 zeigt einen Schaltschrank 1 zur Kühlung nicht dargestellter elektrischer, insbesondere elektronischer Geräte oder Teile, wobei sich Kühllamellen oder dergleichen im Bereich 2 befinden können. Die hier interessierenden, nur schematisch dargestellten Bauteile befinden sich, in bevorzugt voll hermetischer Bauart, im unteren Bereich des Schaltschrankes 1. Dies sind im bevorzugten Ausführungsbeispiel ein Rollkolben- oder Hubkolbenkompressor 3, ein ihn antreibenden Wechselstrommotor 4, eine zusätzliche Spannungseinheit in Form eines Transformators 5 und ebenfalls schematisch als Block angedeutete Schaltmittel 6, sowie nur strichpunktiert angedeutet und als Block mit 16 beziffert, welcher die vorgesehenen Mittel zur Erfassung der jeweiligen Netzspannung, deren Vergleich mit der Nennspannung des Motors und die verschiedenen Schaltstellungen bewirkt. Der Aufbau der Schaltmittel, deren Funktion und der zugehörige Einsatz der zum Block 16 gehörenden Mittel wie Regelungen u.s.w. wird näher anhand der Fig. 2, 3 und 4 erläutert. Die funktionellen Verbindungen oder o.g. Bauteile sind in Fig. 1 nur schematisch mit Pfeilen angedeutet.

In den Figuren 2, 3 und 4 sind gleiche Bauteile oder Schaltverbindungen mit den gleichen Nummern beziffert. L, N sind die Phasen eines Wechselstromnetzes. An ihnen liegt die Primärwicklung 8 der zusätzlichen Spannungsquelle 5, hier in Form eines Transformators, dessen Sekundärwicklung 9 mittels der Schaltmittel des Schaltblockes 6 zu- oder abgeschaltet wird.

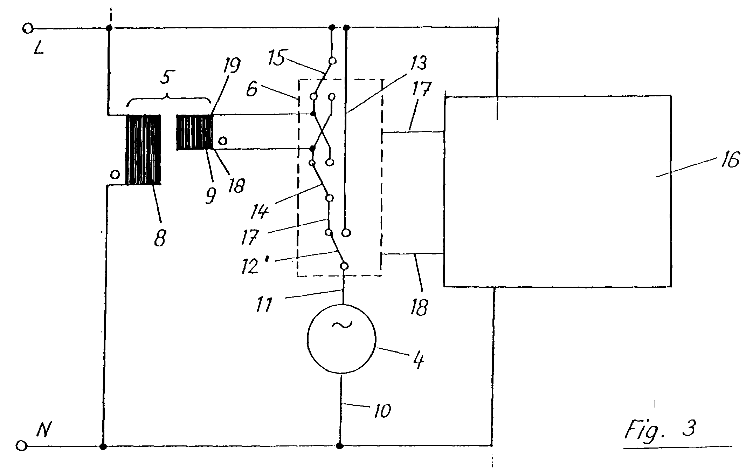

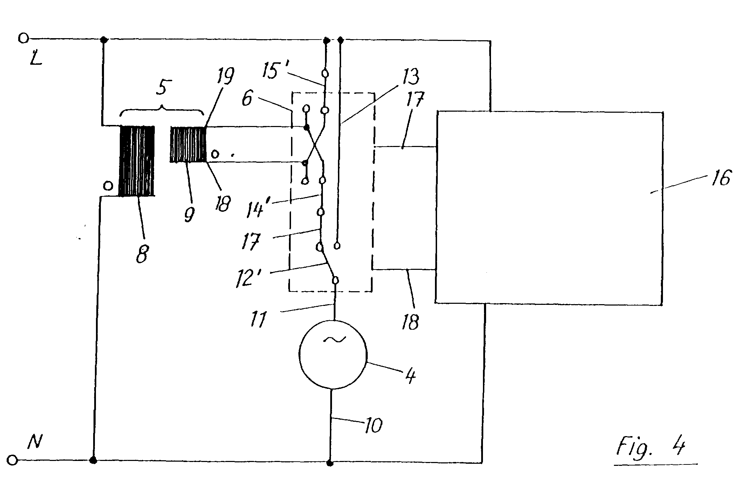

Der Antriebsmotor 4 ist zum einen über die Leitung 10 mit der einen Phase des Netzes, hier der Phase N, und zum andern über die Leitung 11 mit dem Schaltblock 6 verbunden. Im Schaltblock 6 befindet sich ein Schalter 12, der in Fig. 2 in einer Stellung gezeichnet ist, in der er den Motor über die Leitung 11 und eine Leitung 13 an die andere Phase L anschließt. Dies geschieht dann, wenn sich die Netzspannung im Sollbereich (Toleranzbereich) der Nennspannung des Antriebsmotors befindet, d.h. die zusätzliche Spannungsquelle oder -einheit 5 nicht wirksam werden muß. Zugehörige Einrichtungen zur Erfassung der Spannungen, Betätigungen des schon erläuterten Schalters 12 und der noch zu erläuternden Schalter 14, 15 sowie zu einer gegebenenfalls vorgesehenen Veränderung bzw. Einstellung der Ausgangsspannung der Sekundärwicklung 9 sind vorgesehen und mit dem Block 16 schematisch dargestellt. Sie wirken gemäß den auch nur schematisch angedeuteten Verbindungen 17, 18 auf die Schalter 12, 14, 15 ein. Zu den Einrichtungen gemäß Block 16 gehört bevorzugt auch ein Prozessor (single chip), der nach Erfassung der Nennspannungsdaten des Motors einerseits und der zur Verfügung stehenden Netzspannung andererseits und ferner unter Einbeziehung des Toleranzbereiches der Motornennspannung die Zuschaltung der zusätzlichen Spannungsquelle (diese kann auch als zusätzliche, Spannung erzeugende Einheit definiert werden) bewirkt, einschließlich der Einstellung einer etwa vorgesehenen Änderung der Ausgangsspannung dieser Spannungsquelle 5 und ferner deren Zuschaltung dahingehend, daß die Spannung der zusätzlichen Spannungsquelle der Netzspannung entweder hinzugefügt wird (siehe Ausführungsbeispiel der Fig. 3), oder davon abgezogen wird (siehe Ausführungsbeispiel der Fig. 4).

Fig. 3 zeigt den Schalter 12 in seiner anderen Schaltstellung 12', in der er den Antriebsmotor 4 über eine Leitung 17 mit dem Schalter 14 verbindet. In dieser Stellung des Schalters 14 besteht eine leitende Verbindung zum ersten Ausgang 18 der Sekundärwicklung 9 und weiter von dem zweiten Ausgang 19 dieser Sekundärwicklung über einen Schalter 15 (in der in Fig. 3 gezeigten Schaltlage) zur Phase L. In diesem Fall wird die Ausgangsspannung der Sekundärwicklung 9 der Netzspannung L-N hinzugefügt. Diese Schaltstellung der Schalter 14, 15 wird also dann vorgenommen, wenn die Netzspannung kleiner ist als die untere Toleranzgrenze der Betriebsspannung des Motors 4. Ist dagegen die Netzspannung L-N größer als die obere Toleranzgrenze der Betriebsspannung des Motors 4, so erfolgt dann gemäß Fig. 4 eine Verstellung der Schalter 14, 15 in die Positionen 14' und 15'. In diesem Fall ist der Motor 4 zwar auch gemäß der Stellung 12' des Schalters 12 und den Positionen 14', 15' der Schalter 14, 15 an die Sekundärwicklung 9 angeschlossen, jedoch besteht hier eine Verbindung des Schalters 14' zum Ausgang 19 und des Schalters 15' zum Ausgang 18 dieser Sekundärwicklung. Damit erhält der Motor 4 die Netzspannung L-N abzüglich der Ausgangsspannung der Sekundärwicklung des Transformators 5.

Der Transformator 5 hat also nur die Spannung und damit Leistung für den gegebenen Unterschied der Netzspannung zu der Motornennspannung bzw. der Motornennspannung ± der Toleranzgrenzen zu liefern. Insbesondere dann, wenn der von der zusätzlichen Spannungsquelle abzudeckende Spannungsbereich relativ groß ist, empfiehlt es sich, Vorsorge dafür zu treffen, daß die der Netzspannung hinzuzufügende oder von ihr wegzunehmende Ausgangsspannung dieser zusätzlichen Spannungsquelle eingestellt werden kann. Dies kann beispielsweise im Fall des zuvor erläuterten Transformators durch entsprechende Abgriffe an der Wicklung der Sekundärseite 9 geschehen. Dies kann automatisch mittels elektronischer Mittel, bevorzugt eines Prozessors (single chip), gesteuert oder geregelt werden, die zu den Bauelementen gehören, welche generell mit dem Block der Stellung 16 umrissen sind.

Alle erläuterten und dargestellten Merkmale, sowie ihre Kombinationen untereinander, sind erfindungswesentlich.

## Patentansprüche

1. Anordnung zum Betrieb eines elektromotorischen Antriebes eines Kompressors eines Kühlaggregates für elektrische, insbesondere elektronische Schaltschränke, mit Mitteln zur Spannungszuführung und ferner zur Einstellung der dem Antriebsmotor zugeführten Spannung auf dessen Nennspannungsbereich, dadurch gekennzeichnet, daß parallel zum Netzanschluß (L, N) des Antriebsmotors (4) die Anordnung eine zusätzliche Spannungsquelle (5) aufweist, deren Ausgangsspannungsbereich zumindest gleich dem Spannungsbereich zwischen den maximal möglichen Spannüngs Werten der in Frage kommenden Netzspannungen einerseits und der Nennspannung oder der Nennspannung ± deren Toleranzgrenzen andererseits des Antriebsmotors ist, und daß Mittel (6) für die von Hand oder bevorzugt automatisch erfolgende Zuschaltung der zusätzlichen Spannungsquelle an den Antriebsmotor vorgesehen sind.

2. Anordnung nach Anspruch 1, dadurch gekennzeichnet, daß die zusätzliche Spannungsquelle ein Transformator (5) ist, der primärseitig mit der Netzspannung (L, N) gespeist ist und sekundärseitig (9) die zusätzliche Spannungsquelle bildet.

3. Anordnung nach Anspruch 1 oder 2, dadurch gekennzeichnet, daß die Baugröße der zusätzlichen Spannungsquelle auf die von ihr zu liefernde Leistung abgestimmt ist.

4. Anordnung nach Anspruch 2 und 3, dadurch gekennzeichnet, daß die Abmessungen der Primärwicklung (8) des Transformators (5) und die Abmessungen des Wickelraumes der Primärwicklung auf die von der zusätzlichen Spannungsquelle zu liefernden Leistung und den hierfür erforderlichen Strom in der Primärwicklung abgestimmt sind.

5. Anordnung nach einem der Ansprüche 1 bis 4, dadurch gekennzeichnet, daß die Ausgangsspannung der zusätzlichen Spannungsquelle (5) auf unterschiedliche Werte einstellbar ist.

6. Anordnung nach Anspruch 5, gekennzeichnet durch eine Regelung oder Steuerung der Ausgangsspannung der zusätzlichen Spannungsquelle.

7. Anordnung nach einem der Ansprüche 1 bis 6, gekennzeichnet durch Schaltmittel (6), mittels derer die Ausgangsspannung der zusätzlichen Spannungsquelle (5) entweder mit gleicher Polarität oder mit entgegengesetzter Polarität zur Netzspannung dieser hinzuschaltbar ist.

8. Anordnung nach Anspruch 7, gekennzeichnet durch eine Vertauschung der Verbindungen der Spannungsausgänge (18, 19) der zusätzlichen Spannungsquelle mit Einspeisungstellen eines von einer Phase (L) zum Antriebsmotor (4) führenden Leitungszuges.

9. Anordnung nach Anspruch 8, dadurch gekennzeichnet, daß zwei Schalter abwechselnd in eine Schaltstellung (14, 15) oder in eine zweite Schaltstellung (14', 15') schaltbar sind, um damit die jeweilige Hinzufügung oder Abzug der Spannung der zusätzlichen Spannungsquelle zu erreichen.

10. Anordnung nach Anspruch 1 bis 9, gekennzeichet durch eine herbeiführbare Schaltstellung eines Schaltmittels (12) derart, daß der Antriebsmotor (4) direkt an das Netz (L, N) geschaltet ist.

## Claims

1. An arrangement for operating an electromotor drive of a compressor of a refrigerating unit for electric, in particular electronic, switch cabinets, having means for voltage supply and also for setting the voltage supplied to the driving motor over its rated voltage range, characterised in that parallel to the mains power supply (L, N) of the driving motor (4) the arrangement has an additional voltage source (5), whose output voltage range is at least equal to the voltage range between the maximum possible voltage values of the possible mains voltages on the one hand and the rated voltage or the rated voltage ± its tolerance limits of the driving motor on the other hand , and in that means (6) are provided for the manual or preferably automatically occurring connection of the additional voltage source to the driving motor.

2. An arrangement according to claim 1, characterised in that the additional voltage source is a transformer (5), which is supplied on the primary side with mains voltage (L, N) and on the secondary side (9) forms the additional voltage source.

3. An arrangement according to claim 1 or 2, characterised in that the structural size of the additional voltage source is matched to the power to be supplied thereby.

4. An arrangement according to claim 2 and 3, characterised in that the dimensions of the primary winding (8) of the transformer (5) and the dimensions of the winding space of the primary winding are matched to the power to be supplied by the additional voltage source and the current in the primary winding required therefor.

5. An arrangement according to one of claims 1 to 4, characterised in that the output voltage of the additional voltage source (5) can be set at varying values.

6. An arrangement according to claim 5, characterised by a regulation or control of the output voltage of the additional voltage source.

7. An arrangement according to one of claims 1 to 6, characterised by switching means (6), by means of which the output voltage of the additional voltage source (5) either with the same polarity or with opposite polarity to the mains voltage can be added thereto.

8. An arrangement according to claim 7, characterised by an interchange of the connections of the voltage outputs (18, 19) of the additional voltage source with feeding points of a line train leading from one phase (L) to the driving motor (4).

9. An arrangement according to claim 8, characterised in that two switches can be switched alternately into one switching position (14, 15) or into a second switching position (14', 15') in order to achieve the respective addition or subtraction of the voltage of the additional voltage source.

10. An arrangement according to claim 1 to 9, characterised by an inducible switching position of a switching means (12) so that the drive motor (4) is connected directly to the mains (L, N).

## Revendications

1. Dispositif pour faire fonctionner l'entraînement par moteur électrique du compresseur d'un appareil de refroidissement pour armoires électriques, en particulier pour armoires électroniques, comprenant des moyens pour l'amenée de tension électrique et en outre pour le réglage de la tension amenée au moteur d'entraînement à la plage nominale de celui-ci, caractérisé en ce qu'il comprend, en parallèle avec le raccordement au réseau (L, N) du moteur d'entraînement (4), la disposition d'une source de tension supplémentaire (5) dont la plage de tension de sortie est au moins égale à l'intervalle de tension entre les valeurs de tension maximales possibles des tensions de réseau entrant en ligne de compte, d'une part, et la tension nominale du moteur d'entraînement ou cette tension nominale ± ses limites admissibles, d'autre part, et que des moyens (6) sont prévus pour la connexion, s'effectuant manuellement ou, de préférence, automatiquement, de la source de tension supplémentaire au moteur d'entraînement.

2. Dispositif selon la revendication 1, caractérisé en ce que la source de tension supplémentaire est un transformateur (5) dont le côté primaire est alimenté par la tension de réseau (L, N) et dont le côté secondaire (9) forme la source de tension supplémentaire.

3. Dispositif selon la revendication 1 ou 2, caractérisé en ce que l'encombrement de la source de tension supplémentaire est accordé à la puissance à fournir par elle.

4. Dispositif selon les revendications 2 et 3, caractérisé en ce que les dimensions de l'enroulement primaire (8) du transformateur (5) et les dimensions de l'espace de bobinage de l'enroulement primaire sont accordées à la puissance à fournir par la source de tension supplémentaire et au courant nécessaire à cet effet dans l'enroulement primaire.

5. Dispositif selon une des revendications 1 à 4, caractérisé en ce que la tension de sortie de la source de tension supplémentaire (5) est réglable à différentes valeurs.

6. Dispositif selon la revendication 5, caractérisé par une régulation ou une commande de la tension de sortie de la source de tension supplémentaire.

7. Dispositif selon une des revendications 1 à 6, caractérisé par des moyens de commutation (6) par lesquels la tension de sortie de la source de tension supplémentaire (5) peut être mise en circuit, conjointement avec la tension de réseau, soit avec la même polarité que celle-ci, soit avec la polarité contraire.

8. Dispositif selon la revendication 7, caractérisé par une interversion des connexions des sorties de tension (18, 19) de la source de tension supplémentaire avec des points d'alimentation d'une liaison menant d'une phase (L) au moteur d'entraînement (4).

9. Dispositif selon la revendication 8, caractérisé en ce que deux commutateurs peuvent être amenés alternativement à une première position (14, 15) ou à une seconde position (14', 15') afin de produire ainsi l'addition de la tension de la source de tension supplémentaire à la tension de réseau ou sa déduction de la tension de réseau.

10. Dispositif selon les revendications 1 à 9, caractérisé en ce qu'un moyen de commutation (12) peut être amené à une position telle que le moteur d'entraînement (4) est relié directement au réseau (L, N).
